(19) Europäisches Patentamt
European Patent Office
Office européen des brevets

(11) **EP 2 930 486 A1**

(12) **EUROPEAN PATENT APPLICATION**
published in accordance with Art. 153(4) EPC

(43) Date of publication:
**14.10.2015 Bulletin 2015/42**

(51) Int Cl.:
*G01L 5/00* (2006.01)    *B60B 35/18* (2006.01)
*F16C 19/18* (2006.01)    *F16C 19/52* (2006.01)
*F16C 41/00* (2006.01)

(21) Application number: **13860258.6**

(22) Date of filing: **26.11.2013**

(86) International application number:
**PCT/JP2013/081695**

(87) International publication number:
**WO 2014/087871 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.12.2012 JP 2012266847**

(71) Applicant: **NTN Corporation**
**Osaka-shi, Osaka 550-0003 (JP)**

(72) Inventors:
• **HATAKEYAMA, Wataru**
**Iwata-shi**
**Shizuoka 438-0037 (JP)**

• **TAKAHASHI, Toru**
**Iwata-shi**
**Shizuoka 438-0037 (JP)**
• **NISHIKAWA, Kentarou**
**Iwata-shi**
**Shizuoka 438-0037 (JP)**

(74) Representative: **Bugnion Genève**
**Bugnion S.A.**
**Conseils en Propriété Industrielle**
**Route de Florissant 10**
**Case Postale 375**
**1211 Genève 12 (CH)**

(54) **WHEEL BEARING DEVICE WITH ATTACHED SENSOR**

(57)    A sensor-equipped wheel support bearing assembly capable of estimating an accurate load value without depending on the frequency of fluctuation that occurs in an input load, is provided. A vehicle-wheel bearing (100) is provided with a plurality of sensors (20) for detecting a load applied thereto. The vehicle-wheel bearing (100) is provided with a signal processor (31) for generating signal vectors from output signals of the sensors, a load calculation processor (32) for calculating a load acting on a wheel, based on the signal vectors, and an input load fluctuation detector (33) for detecting a fluctuation component of the input load which is included in the output signals of the sensors (20). The load calculation processor (32) calculates the load by applying a load calculation scheme that shifts in accordance with the fluctuation component detected by the input load fluctuation detector (33).

Fig. 1

## Description

CROSS REFERENCE TO THE RELATED APPLICATION

This application is based on and claims Convention priority to Japanese patent application No. 2012-266847, filed December 6, 2012, the entire disclosure of which is herein incorporated by reference as a part of this application.

BACKGROUND OF THE INVENTION

(Field of the Invention)

The present invention relates to a sensor-equipped wheel support bearing assembly including a load sensor for detecting a load acting on a bearing in a wheel.

(Description of Related Art)

In order to determine a load acting on a wheel of an automotive vehicle, a sensor-equipped wheel support bearing assembly has been proposed, which includes a strain gauge affixed on an outer diameter surface of an outer ring of the bearing assembly to sense strain in the outer diameter surface of the outer ring, so that a load can be determined based on the detected strain (for example, Patent Document 1). However, in the technique disclosed in Patent Document 1, when determining a load acting on the wheel support bearing assembly, deformation of a stationary ring with respect to the load is inadequate and therefore the strain is also inadequate. Hence, the detection sensitivity may be unsatisfactory, and the load cannot be accurately determined.

In order to solve the above problem, a sensor-equipped wheel support bearing assembly (for example, Patent Document 2) has been proposed. In the bearing assembly a sensor unit is mounted on an outer ring of a bearing. The sensor unit includes a strain generation member fixed by means of three contact fixing segments, and two strain sensors disposed on the strain generation member, and outputs strain signals. The wheel support bearing assembly performs a process of estimating and calculating an input load (a load input from a road surface to a wheel, i.e., an applied load) is performed by using, as outputs from the sensor units, a sum value of output signals from the two strain sensors (sensor pair), amplitude values thereof. Also, sensor-equipped wheel support bearing assemblies having the following configurations have been proposed (Patent Documents 3 and 4).

A wheel support bearing in the sensor-equipped wheel support bearing assembly disclosed in Patent Document 3 includes: an outer member having an inner periphery formed with a plurality of rows of raceway surfaces; an inner member having an outer periphery formed with raceway surfaces facing the raceway surfaces of the outer member; and a plurality of rows of rolling elements interposed between the respective raceway surfaces in the outer member and the inner member. The bearing supports a wheel so that the wheel is rotatable relative to a vehicle body. On an outer diameter surface of a stationary member which is either the outer member or the inner member, at least one sensor unit pair including two sensor units is provided such that the two sensor units are disposed at positions having a phase difference of 180 degrees in the circumferential direction of the stationary member. Each sensor unit includes: a strain generation member having two or more contact fixing segments that are in contact with and fixed to the outer diameter surface of the stationary member; and a sensor that is mounted to the strain generation member to detect a strain occurring in the strain generation member.

In this configuration, based on a difference between the output signals from the two sensor units of the sensor unit pair, a radial load estimator estimates a radial load acting radially on the wheel support bearing. Also, based on the sum of the output signals from the two sensor units of the sensor unit pair, an axial load estimator estimates an axial load acting axially on the wheel support bearing. Here, the two sensor units of the at least one sensor unit pair are disposed on upper and lower surface areas of the outer diameter surface of the stationary member, which correspond respectively to top and bottom positions relative to a tire contact surface. Based on the amplitudes of the output signals of the sensors of the sensor unit pair, an axial load direction determiner determines a direction of the axial load.

If the contact fixing segments of the strain generation member of the sensor unit are disposed near the rolling surface of the stationary member of the wheel support bearing, a vibration or oscillation of approximately sinusoidal wave is induced in the sensor output signals in response to rotation of the wheel. The vibration is caused by a change in strain due to passage of the rolling elements. In the above configuration, an axial load is determined based on a difference of amplitude values (fluctuation components attributable to revolution of the rolling elements) between the output signals from the two sensor units disposed respectively at the top and bottom positions. Depending on whether the axial load is positive or negative, a load is calculated by using a load estimating parameter appropriate therefor. Thus, the load can be estimated with high sensitivity.

In the sensor-equipped wheel support bearing assembly disclosed in Patent Document 4, three or more sensor units are provided on the outer diameter surface of the stationary member of the wheel support bearing disclosed in Patent Document 3, and a radial load acting radially on the wheel support bearing and an axial load acting axially on the wheel support bearing are estimated by load estimator, based on output signals from the three or more sensor units. Each of the sensor units includes: a strain generation member having two or more contact fixing segments that are in contact with and fixed to the outer diameter surface of the stationary member; and one or more sensors that are mounted to the strain generation member to detect a strain occurring in the strain generation member. Further, the output signal from each sensor unit is separated into a DC component and an AC component by output signal separating means. The load estimator estimates a load in each direction based on a linear function which is obtained by, with the amplitude values of the DC components (average value) and the AC components being variables, multiplying the variables by a correction coefficient determined for each estimated load in each direction.

The sensor-equipped wheel support bearing assembly configured as described above is capable of estimating a radial load and an axial load with high sensitivity and high accuracy under any load condition.

[Prior Art Document]

[Patent Document]

[Patent Document 1] JP Published Int'1 Application No. 2003-530565
[Patent Document 2] JP Laid-open Patent Publication No. 2009-270711
[Patent Document 3] JP Laid-open Patent Publication No. 2010-43901
[Patent Document 4] JP Laid-open Patent Publication No. 2010-96565

SUMMARY OF THE INVENTION

In the sensor-equipped wheel support bearing assemblies as disclosed in Patent Documents 2 to 4 above, the load calculating process is performed on the sensor output signal that has been filtered by LPF (Low-Pass Filter) processing. Accordingly, the following problems might occur.

Even if a fluctuation included in the input load is in high frequency, a high frequency component of the sensor output signal is cut off in accordance with a cutoff frequency of the LPF. This may cause a problem that the fluctuation component of the load input from the road surface does not appear in the estimated load value which is outputted.

In the configuration of calculating the estimated load value by using the sensor output signal having filtered by the LPF processing, since the fluctuation component, in the high frequency band, of the sensor output signal is cut off, an error in the estimated load value outputted may occur, or an estimated load value having a characteristic different from the original characteristic may be output.

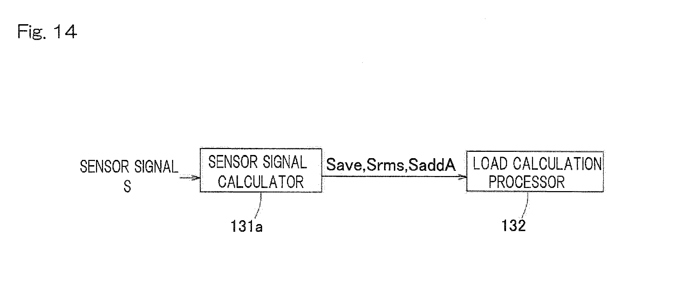

In a system which uses the estimated load value outputted for vehicle control, if the estimated load value is not accurate, desired control may not be performed.
The above problems are described in more detail hereinafter. In the load sensors of the sensor-equipped wheel support bearing assembly as disclosed in Patent Documents 2 to 4, as shown in Fig. 14, obtained strain sensor signals are filtered by the LPF processing in a sensor signal calculator 131 a, and the resultant signal (Save: a moving average value, Srms: a root mean square value, SaddA: a sum of outputs from sensor pair, or the like) is subjected to load estimation by a load calculation processor 132.
However, if the fluctuation of a load input to a tire is in high frequency due to, for example, a fluctuation in the load caused by stick-slip phenomenon that is likely to occur when the tire starts to slip, or a fluctuation that occurs during traveling on a bumpy road surface, an input component in a high frequency band corresponding to the cutoff frequency of the LPF is removed from the sensor signal, and therefore, no fluctuation may appear in the output of the load calculation section.
When the fluctuation component of the input load is in high frequency, if the load calculating process is performed by using the sensor signal having been filtered by the LPF processing, the estimated load value outputted may have a characteristic different from the original characteristic, or the estimation error may occur. If the load output is not accurate, the system using the load output for vehicle control cannot realize desired control.
Accordingly, in the configuration of performing the load calculating process by using the sensor output signal having been filtered by the LPF processing, it is necessary to take a measure for estimating an accurate load value without depending on the frequency of fluctuation that occurs in the input load.
An object of the present invention is to provide a sensor-equipped wheel support bearing assembly which is capable of estimating an accurate load value no matter which frequency the fluctuation that occurs in an input load belongs to.
Hereinafter, for convenience of easy understanding, a description will be given with reference to the reference numerals in embodiments.
A sensor-equipped wheel support bearing assembly according to the present invention includes: a wheel support bearing 100 for rotatably supporting a vehicle wheel relative to a vehicle body structure, the bearing including an outer member 1 having an inner periphery formed with a plurality of rows of raceway surfaces, an inner member 2 having an outer periphery formed with raceway surfaces that faces the respective raceway surfaces in the outer member, and a plurality of rows of rolling elements 5 interposed between the facing raceway surfaces of the respecting outer and inner members 1 and 2; a plurality of sensors 20 provided in the wheel support bearing 100 to detect a load acting on the wheel support bearing 100; a signal processor 31 configured to process an output signal from the plurality of sensors 20 to generate a signal vector; a load calculation processor 32 configured to calculate a load acting on the wheel, based on the signal vector; and an input load fluctuation detector 33 configured to calculate a fluctuation component of the input load which is included in the output signal from at least one of the plurality of sensors 20.

The load calculation processor 32 calculates the load by applying a load calculation scheme that shifts in accordance with the fluctuation component detected by the input load fluctuation detector 33.

According to this configuration, since the load calculation scheme shifts in accordance with the fluctuation component detected by the input load fluctuation detector 33, an accurate load value can be estimated without depending on the frequency of fluctuation that occurs in the input load.

The load calculation processor 32 may calculate the load based on, out of the signal vector generated by the signal processor 31, a signal vector obtained without low-pass filtering the output signals from the sensors 20 with an LPF (Low Pass Filter) 35A, when the fluctuation component detected by the input load fluctuation detector 33 includes a high-frequency fluctuation component, and may calculate the load based on, out of the signal vector generated by the signal processor 31, a signal vector obtained by low-pass filtering the output signals from the sensors 20 with an LPF 35A, when the fluctuation component includes a low-frequency fluctuation component. Thus, response characteristics to the input load are improved. Whether the fluctuation component includes a high-frequency fluctuation component or a low-frequency fluctuation component is determined according to an appropriately decided criterion described later for each example. The high-frequency fluctuation component is, for example, a fluctuation component determined to mainly include frequencies higher than a given frequency value, and the low-frequency fluctuation component is, for example, a fluctuation component determined to mainly include frequencies lower than the given frequency value.

When the load calculation processor 32 calculates the load based on the signal vector obtained by low-pass filtering the output signals from the sensors 20 with the LPF 35A, the signal processor 31 may specify the number of samplings of the filter processing using the LPF 35A to be performed on the output signals from the sensors 20, in accordance with the fluctuation component detected by the input load fluctuation detector 33, so that a cutoff frequency of the LPF 35A is set.

In this configuration, since the cutoff frequency is set according to load fluctuations at that time, more accurate load estimation is realized.

The load calculation processor 32 may calculate the load by combining a load value calculated based on, out of the signal vector generated by the signal processor 31, a signal vector obtained without low-pass filtering the output signals from the sensors 20 with the LPF 35A, and a load value calculated based on, out of the signal vector generated by the signal processor 31, a signal vector obtained by low-pass filtering the output signals from the sensors 20 with the LPF 35A, in accordance with the fluctuation component detected by the input load fluctuation detector 33.

The noise component may be increased in the calculation result when only the signal vector not having been low-pass filtered is used. However, by combining this signal vector and the signal vector having been filtered, the effect of noise can be reduced.

When an evaluation value E serving as criteria for determining whether the fluctuation component detected by the input load fluctuation detector 33 is in a higher-frequency which is higher than the given frequency or in a lower-frequency which is lower than the given frequency, is in a boundary area within a predetermined range of $\pm h$ (-h to +h) from a predetermined threshold C, the load calculation processor 32 may generate a calculation output Fout by combining a load value Foff calculated based on the signal vector obtained without low-pass filtering the output signals from the sensors 20 with the LPF 35A, and a load value Fon calculated based on the signal vector obtained by low-pass filtering the output signals from the sensors 20 with the LPF 35A, in accordance with proportions $\alpha$ and $\beta$ expressed by the following equations:

$$Fout = \alpha Fon + \beta Foff$$

$$\alpha = f(x)$$

$$\beta = 1 - \alpha$$

where x is an increment or incremental displacement of the evaluation value E from the threshold C, and $\alpha$ is a monotonically increasing function in which $\alpha = 0$ when x = -h, and $\alpha = 1$ when x = h.

Preferably, the function f(x) is represented by the following equation:

$$\alpha = f(x) = 1/2h \cdot (x+h)$$

The at least one sensor 20 may include a sensor unit provided on an outer diameter surface of a stationary member which is either the outer member 1 or the inner member 2. The sensor unit 20 may include: a strain generation member 21 having three contact fixing segments 21a that are in contact with and fixed to the outer diameter surface of the stationary member; and two strain detection elements 22 (22A, 22B) mounted to the strain generation member 21, and configured to a detect strain occurring in the strain generation member 21. The strain detection elements 22 (22A, 22B) may be provided between a first and a second contact fixing segments 21a, of the strain generation member 21, adjacent to each other, and between the second and a third contact fixing segments 21a thereof adjacent to each other, respectively. An interval between the contact fixing segments 21a adjacent to each other or an interval between the strain detection elements 22 (22A, 22B) adjacent to each other may be set to {n + 1/2 (n: integer)} times a pitch with which the rolling elements 5 are arranged.

The input load fluctuation detector 33 may detect the fluctuation component, based on a difference Sadd_dif (Sadd_dif = Sadd-SaddA) between a sum Sadd of the output signals from the two strain detection elements, and a signal SaddA obtained by low-pass filtering the sum signal Sadd with the LPF 35A.

According to this configuration, the calculation is facilitated, and the processing time is reduced.

Alternatively, the input load fluctuation detector 33 may calculate the evaluation value E based on past data of a difference Sadd_dif (Sadd_dif = Sadd-SaddA) between a sum Sadd of the output signals from the two strain detection elements, and a signal SaddA obtained by low-pass filtering the sum signal Sadd with the LPF 35A. The calculated evaluation value E is outputted as a detection result of the input load fluctuation detector 33.

The evaluation value E may be an RMS value (mean square deviation (also referred to as a root mean square value)) of the difference values Sadd dif within a predetermined period of time.

Alternatively, the evaluation value E may be a standard deviation of the difference values Sadd_dif within a predetermined period of time.

Alternatively, the evaluation value E may be a maximum value of the difference values Sadd_dif within a predetermined period of time.

Alternatively, the evaluation value E may be an integrated value of absolute values of the difference values Sadd_dif within a predetermined period of time.

The input load fluctuation detector 33 may calculate the evaluation value E by calculating the difference values Sadd_dif for the plurality of sensor units 20, respectively, and selecting one of the difference values or combining some or all of the difference values. The calculated evaluation value E may be outputted as a detection result of the input load fluctuation detector 33.

The input load fluctuation detector 33 may detect the fluctuation component, based on a signal obtained by high-pass filtering a sum signal Sadd of the output signals from the two strain detection elements with an HPF (High Pass Filter).

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 shows a diagram illustrating, in combination, a cross-sectional view of a sensor-equipped wheel support bearing assembly according to an embodiment of the present invention and a block diagram illustrating a conceptual configuration of a detection system of the assembly;
Fig. 2 shows a front elevational view of an outer member of the assembly, as viewed from an outboard side;
Fig. 3 shows a top view of a sensor unit of the sensor-equipped wheel support bearing assembly on an enlarged scale;
Fig. 4 shows a cross section of Fig. 3 cut along the line IV-IV;
Fig. 5 shows a block diagram illustrating an example of a configuration of the detection system;
Fig. 6 shows a waveform diagram illustrating a relationship between output signals S0, S1 of respective two strain detection elements of a sensor unit, and a sum signal Sadd of these signals;
Fig. 7 shows a waveform diagram illustrating a relationship among the sum signal Sadd, a signal SaddA obtained by filtering, with an LPF, the sum signal Sadd, and a difference value Sadd_dif between these signals;
Fig. 8 shows a block diagram illustrating another example of a configuration of input load fluctuation detector in the detection system;
Fig. 9 shows a block diagram illustrating an example of a configuration of load calculation processor in the detection system;
Fig. 10 shows a graph illustrating a temporal change of an evaluation value, and defined areas including a threshold in the evaluation value;
Fig. 11 shows a block diagram illustrating another example of a configuration of the load calculation processor;
Fig. 12 shows a graph illustrating examples of proportions α and β in the defined areas including the threshold in the evaluation value;
Fig. 13 shows a graph illustrating other examples of the proportions α and β in the above-mentioned areas; and

Fig. 14 shows a block diagram illustrating a schematic configuration of a detection system according to a conventional example.

DESCRIPTION OF EMBODIMENTS

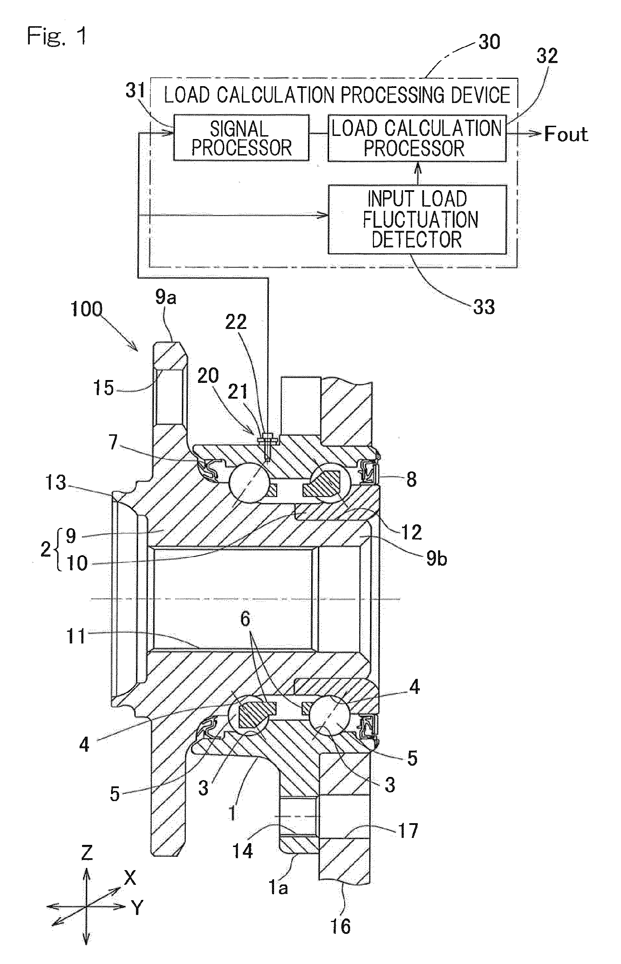

A sensor-equipped wheel support bearing assembly according to a first embodiment of the present invention will be described with reference to Figs. 1 to 13. The sensor-equipped wheel support bearing assembly according to this embodiment is applied to a third generation model of a wheel support bearing segment 100 of an inner ring rotating type, which is used for rotatably supporting a drive wheel. In is to be noted that hereinafter in this description, an "outboard" and "inboard" represent one side of a vehicle body away from the longitudinal center of the vehicle body and the other side of the vehicle body close to the longitudinal center of the vehicle body, respectively, when assembled in the vehicle body.

The bearing segment 100 in the sensor-equipped wheel support bearing assembly, as shown in a cross-sectional view of Fig. 1, includes: an outer member 1 having an inner periphery formed with double rows of raceway surfaces 3; an inner member 2 having an outer periphery formed with raceway surfaces 4 opposed to the respective raceway surfaces 3; and a plurality of rows of rolling elements 5 interposed between the raceway surfaces 3 of the outer member 1 and the raceway surfaces 4 of the inner member 2. The wheel support bearing segment 100 is implemented as a double-row angular contact ball bearing, in which the rolling elements 5 are in the form of rows of balls, with each row of balls being retained by a retainer 6. The raceway surfaces 3, 4 have arcuate cross sectional shapes and are formed so as to have respective ball contact angles held in back-to-back relation with each other. A bearing space delimited between the outer member and inner members 1, 2, positioned one inside the other, has its opposite open ends sealed by respective sealing members 7,8.

The outer member 1 serves as a stationary member, and is of one piece construction having, on an outer periphery, a flange 1a to be fitted to a vehicle body. The flange 1a is mounted to a knuckle 16 forming a part of a vehicle suspension system (not shown) of the vehicle body. The flange 1a has threaded holes 14 for attachment to the knuckle, in a plurality of portions in the circumferential direction, and knuckle bolts (not shown) are inserted into corresponding bolt insertion holes 17 of the knuckle 16 on the inboard side and threaded into the threaded holes 14, thereby to mount, to the knuckle 16, the flange 1a for attachment to the vehicle body.

The inner member 2 serves as a rotational member, and includes: a hub unit 9 having a wheel mounting hub flange 9a; and an inner ring segment 10 mounted on an outer periphery of an inboard side end an axle portion 9b of the hub unit 9. The hub unit 9 and the inner ring segment 10 are formed with the respective of rows of the raceway surfaces 4. The hub unit 9 has an inboard end, an outer periphery of which is stepped to form a reduced diameter surface that defines an inner ring mounting surface 12, to which the inner ring 10 is fitted. The hub unit 9 has a center formed therein with a through bore 11. The hub flange 9a has press fitting holes 15 for receiving hub bolts (not shown) in a plurality of portions in the circumferential direction. The hub unit 9 also has a cylindrical pilot portion 13 for guiding a wheel and a brake component (both not shown) protrudes toward the outboard side, in the vicinity of the root portion of the hub flange 9a of the hub unit 9.

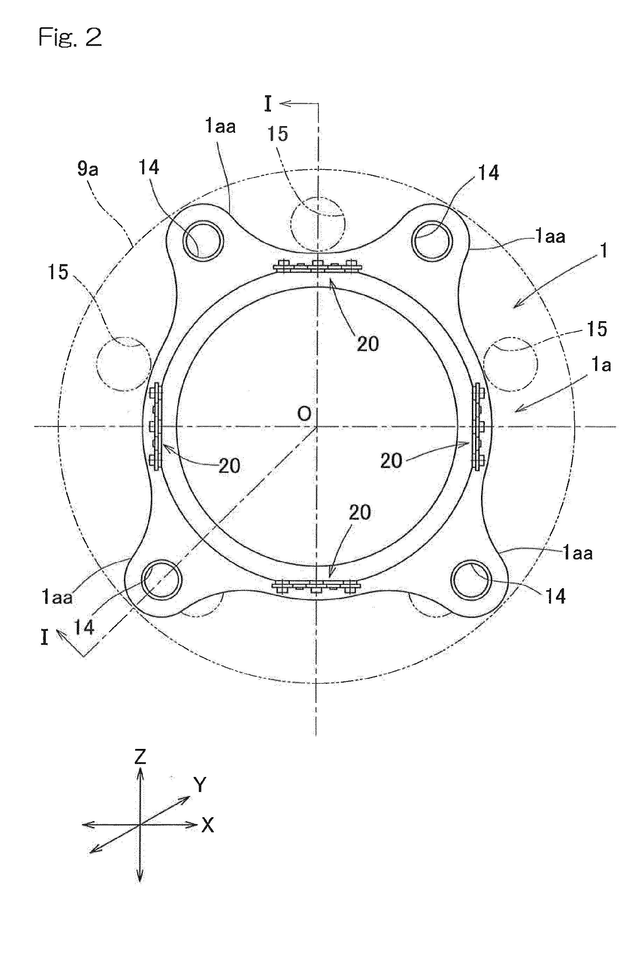

Fig. 2 shows a front elevational view of the outer member 1 of the wheel support bearing 100, as viewed from the outboard side. It is to be noted that the cross section of the wheel support bearing assembly of Fig. 1 is taken along the line I-I in Fig. 2. As shown in Fig. 2, the flange 1a to be fitted to the vehicle body has protruding pieces 1aa which each are so shaped that the circumferential portion thereof, where the internally threaded hole 14 are defined, and protrudes radially outwardly beyond the remaining portion of the vehicle body fitting flange 1a.

The outer member 1 serving as the stationary member has an outer diameter surface provided with four sensor units 20 serving as load detection sensors. In this description, the sensor units 20 are disposed on an upper surface area, a lower surface area, a right surface area , and a left surface area which are located on the outer diameter surface of the outer member 1 so as to correspond to upper-lower positions and front-rear positions relative to a tire contact surface.

Each of the sensor units 20 includes strain detection elements 22 connected to a load calculation processing device 30 shown in Fig. 1. The load calculation processing device 30 includes: a signal processor 31 configured to process output signals from the respective sensor units 20 to generate a signal vector; a load calculation processor 32 configured to calculate a load acting on a wheel, based on the signal vector; and an input load fluctuation detector 33 configured to detect a fluctuation component of the input load, which is included in the output signal from each sensor unit 20. The signal processor 31, the load calculation processor 32, and the input load fluctuation detector 33 may not necessarily be integrated into the load calculation processing device 30, and may be separately provided. Further, the signal processor 31, the load calculation processor 32, the input load fluctuation detector 33, and the load calculation processing device 30 may be mounted to the wheel support bearing 100, or may be located in the vehicle, for example, near a main ECU (Electric Control Unit) so as to be apart from the wheel support bearing 100, or may be located as a lower-order control portion of a supervising control unit of the ECU.

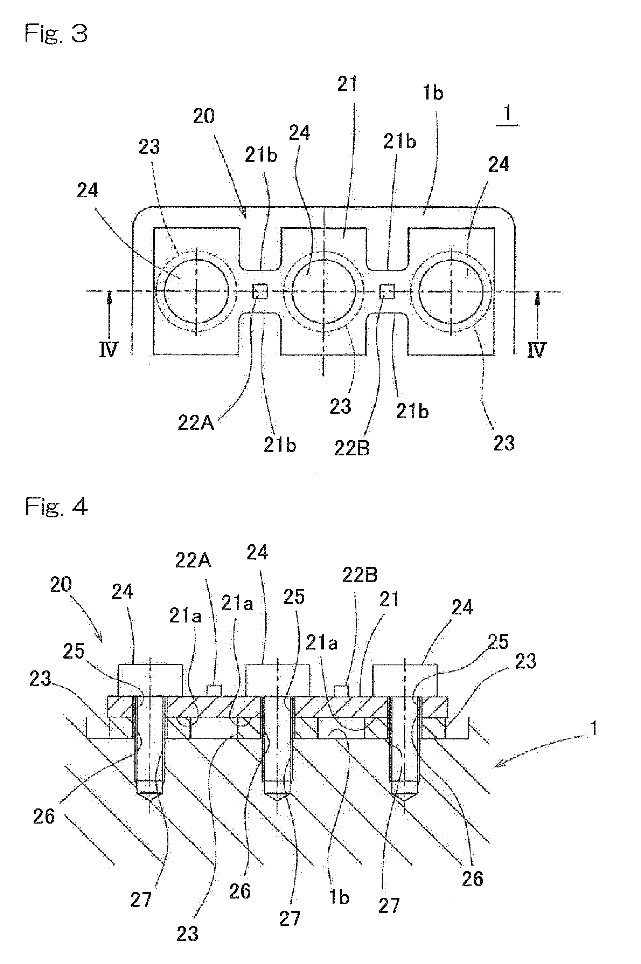

In this embodiment, the sensor units 20 having an exemplary structure as shown in Figs. 2 to 4 are used as a sensor for detecting a load acting on a wheel in each direction. Each of the sensor units 20 includes: a strain generation member 21 fixed to the outer member 1 at contact fixing segments 21a, and the strain detection element 22 (22A, 22B), mounted to the strain generation member 21, for detecting strain of the strain generation member 21, as described later in detail. In the exemplary structure shown in Figs. 3 and 4, the two strain detection elements 22 (22A, 22B) are applied to one sensor unit 20. Alternatively, one strain detection element 22 may be applied to one sensor unit 20.

The load detection sensor is not limited to one as shown in Figs. 2 to 4. For example, a displacement sensor (eddy-current sensor, magnetic sensor, reluctance sensor, or the like) may be mounted to the stationary member which is either the outer member 1 or the inner member 2, and a target to be detected may be disposed in the rotational member. A relative displacement between the outer member 1 and the inner member 2 may be calculated, and the load acting on the wheel may be calculated based on a previously obtained relationship between a load and a displacement. As such, the sensor-equipped wheel support bearing assembly according to the present embodiment includes such a load sensor that directly or indirectly detects a force applied between the inner member 2 and the outer member 1 of the bearing by using a sensor provided on the stationary member, and estimates the input load by calculation.

In order to calculate loads Fx, Fy, Fz in three directions, i.e., X, Y, Z directions perpendicular to each other, or moment loads in the respective directions, a configuration for calculation using at least three sets of sensor information (output signals from sensor units) is necessary. In other words, a load detection system unit is provided which generates signal vectors so as to be extracted by processing a plurality of sensor signals (signals from a plurality of sensor units) as necessary, and executes load estimating calculation with the use of the signal vectors, thereby to obtain an input load F (= {Fx, Fy, Fez, ···}). The X direction corresponds to the anteroposterior direction of the vehicle, the Y direction corresponds to the axial direction, and the Z direction corresponds to the vertical direction. The loads to be calculated by the load calculation processor 32 are the loads in the X, Y, Z directions at a road surface contact point of a wheel.

In the load detection system unit having such a configuration, load estimating calculation can be performed by determining a calculation coefficient matrix M and an offset MO in numerical analysis or an experiment so as to satisfy the following relational expression to the extent that a linear approximation holds:

$$F = M \cdot S + M0$$

in which, when the signal vector obtained from each sensor signal (each of the sensor signals from the plurality of sensor units) is represented as S, the signal vector S represents an input..

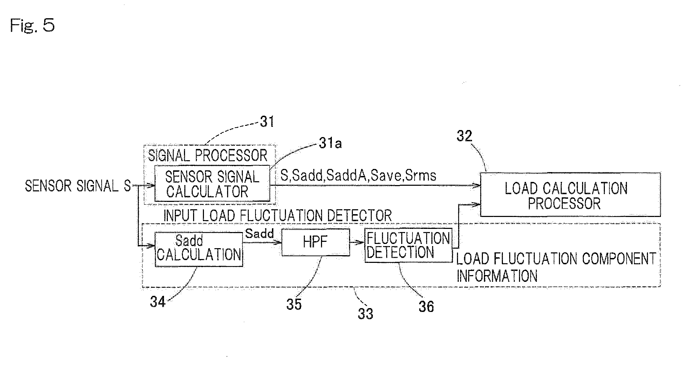

The signal processor 31 shown in Fig. 1 includes a sensor signal calculator 31a (Fig. 5). The sensor signal calculator 31a (Fig. 5) performs calculation on the output signals S (S0, S1, S2, ···) from the respective load detection sensors to generate the signal vectors. In this embodiment, since each of the sensor units 20 serving as the load detection sensors produce the output signals S0, S1 from the respective two strain detection elements 22A, 22B (Fig. 3), the signal processor 31 generates the following signal vectors:

S (S0, S1, S2,...): output signals from the respective strain detection elements 22 of all the sensor units 20;
Sadd = S0 + S1: a sum of the output signals S0, S1 from the two strain detection elements 22A, 22B of any one sensor unit 20;
SaddA = LPF(S0+S1) = LPF(Sadd): a value obtained by filtering, with an LPF, the Sadd;
Save: a moving average value of S; and
Srms: a root mean square value of S.

As shown in Fig. 5, the load calculation processor 32 executes the load calculation by using the above-mentioned signal vectors generated by the signal processor 31 to obtain the input load F(= {Fx, Fy, Fz,...}).

As described above as the problem of the conventional technique, if the fluctuations of an input load is included in high frequency band, an input component in the high frequency band is not included in SaddA having been subjected to filter processing with an LPF in accordance with the cutoff frequency of the filter processing. As a result, if the load calculation processor 32 executes load estimating calculation using only SaddA as a signal vector, no fluctuation component appears in a calculated load value that is outputted. In this case, the response and following characteristics with respect to the actual load are degraded.

In order to prevent this, the input load fluctuation detector 33 includes: an Sadd calculation processing section 34 configured to calculate a sum Sadd of the output signals S0, S1 from the two strain detection elements 22A, 22B of each sensor unit 20; an HPF processing section 35 configured to filter the calculated sum signal Sadd with an HPF (High Pass Filter); and a fluctuation detection section 36 configured to extract a fluctuation component Sadd_dif (= Sadd - SaddA) from Sadd having been high-pass filtered. Hereinafter, the functions of the Sadd calculation section 34, the HPF processing section 35, and the fluctuation detection section 36 will be described in detail.

[Sadd calculation processing section 34]

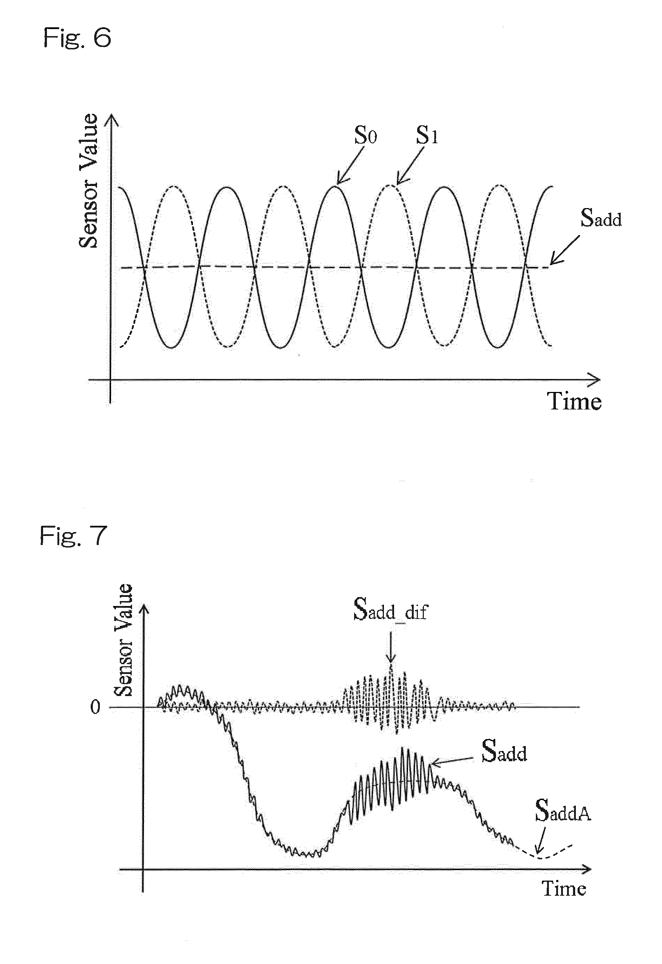

When the contact fixing segments 21 a of the strain generation member 21 in the sensor unit 20 are disposed in the vicinity of the raceway surfaces 3 of the outer member 1, a vibration or oscillation similar to a sinusoidal wave as shown in Fig. 6 appears in the output signals S0, S1 of the two strain detection elements 22A, 22B in response to rotation of the wheel. In other words, the strain detection elements 22A, 22B detect a change in the strain due to passage of the rolling elements 5. Since each output signal considerably vary or oscillate due to rotation of the bearing, the individual output signals S0, S1 are not suitable for determination as to whether the input load fluctuates even though the input load is constant. Instead of the individual output signals S0, S1, the sum signal Sadd of the output signals S0, S1 from the two strain detection elements 22A, 22B is used. As a result, components caused by movement of the rolling elements 5 are cancelled, and only strain components inputted in phase with each other are extracted. Thus, the fluctuation in the input load can be detected.

[HPF processing section 35]

When the load acting on the sensor unit 20 fluctuates, as shown in Fig. 7, fluctuation components in all frequency bands (however, some frequency bands are cut off depending on the number of samplings) are superposed on the sum signal Sadd. Based on only the sum signal Sadd, it is difficult to appropriately extract only the fluctuation component of the input load from the wide frequency band.

In order to extract only a fluctuation component in a high frequency band (for example, a frequency band higher than a given frequency), a fluctuation component of a low frequency (for example, a component of a frequency lower than the given frequency) may be cut off, and the signal Sadd_dif (= Sadd - SaddA) centered at approximately zero as shown in Fig. 7 can be extracted by filtering the sum signal Sadd by HPF processing. In the alternative embodiment, the Sadd_dif may be calculated based on the following equation using the SaddA (a value obtained by filtering, with an LPF, the Sadd):

$$\text{Sadd\_dif} = \text{Sadd} - \text{SaddA} \cdots (1)$$

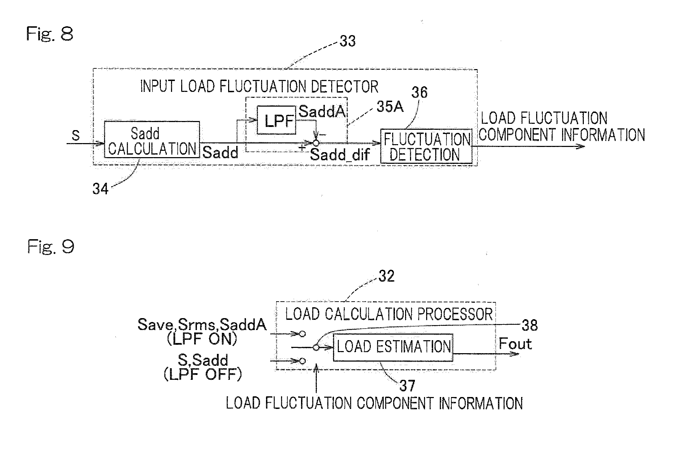

Fig. 8 shows input load fluctuation detector 33 having the configuration of the alternative embodiment, which is different from that of the input load fluctuation detector 33 shown in Fig. 5. The input load fluctuation detector 33 includes a calculation section 35A with an LPF as shown in Fig. 8, instead of the HPF processing section 35 shown in Fig. 5. By calculating the signal Sadd_dif with using the SaddA obtained by filtering the sum signal Sadd with LPF processing, advanced calculation is not necessary, thereby realizing simplified calculation and increased calculation speed.

[Fluctuation detection section 36 and load fluctuation component information]

The fluctuation detection section 36 detects a fluctuation in the signal Sadd_dif inputted thereto, and outputs, to a load estimation calculation section 37 (Fig. 9) of the load calculation processor 32, information as to whether load fluctuation component information (Global Strain Information) is in a high frequency state (for example, mainly including frequency components higher than a given frequency). The fluctuation detection section 36 may be configured to calculate an evaluation value E serving as criteria for detecting a fluctuation of Sadd_dif, based on the past Sadd_dif. For example, the evaluation value E may be an RMS value, or a standard deviation value, or an integrated absolute value, of a plurality of difference values Sadd_dif within a predetermined period of time. By calculating the evaluation value E as described above, noise can be reduced by the filter effect, leading to prevention of malfunction. Alternatively, the evaluation value E may be a maximum value of a plurality of sum signals Sadd_dif within a predetermined period of time.

Furthermore, the evaluation value E may be calculated by calculating sum signals Sadd_dif for the plurality of sensor units 20, and selecting one of them or combining some or all of them. In this case, since the number of the sensor units 20 used for the detection is increased, the fluctuation detection section 36 can appropriately deal with the fluctuation components corresponding to more load directions, thereby improving the reliability of the detection result.

The load calculation processor 32 shown in Fig. 9 includes a selector switch 38 and the load estimation calculation section 37. The load estimation calculation section 37 selects, using the selector switch 38, either of load estimating calculation based on the signal vector having been filtered by LPF processing or load estimating calculation based on the signal vector not having been filtered by LPF processing, depending on the load fluctuation component information supplied from the input load fluctuation detector 33.

According to the load fluctuation component information from the input load fluctuation detector 33, the signal processor 31 may specify the number of samplings of the LPF processing performed on the sensor signal used in the load estimation calculation section 37 of the load calculation processor 32 to change the cutoff frequency of the LPF. Accordingly, the load fluctuation frequency can be flexibly changed, and noise reduction due to the filter effect can be expected.

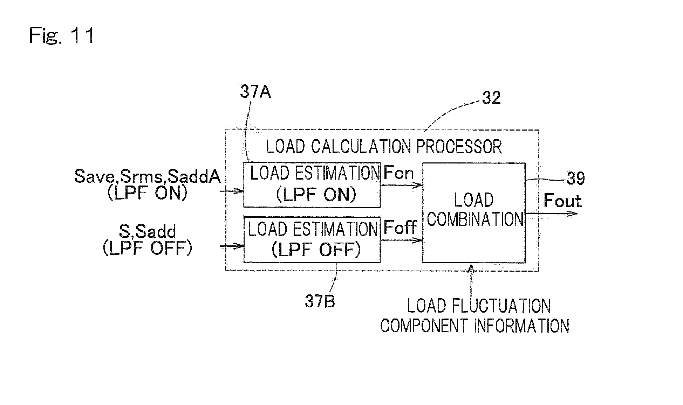

Fig. 11 shows another configuration of the load calculation processor 32. The load calculation processor 32 includes: a load estimation calculation section 37A that estimates and calculates a load based on the signal vector having been filtered by LPF processing; a load estimation calculation section 37B that estimates and calculates a load based on the signal vector not having been filtered by the LPF processing; and a load combination section 39 that may combine load outputs Fon and Foff from the respective sections 37A and 37B, in accordance with the load fluctuation component information from the input load fluctuation detector 33, thereby to eventually obtain a load output Fout.

In this embodiment, a processing result in which noise is suppressed although delay time is somewhat large (the load output Fon based on the signal vector having been filtered by LPF processing) and a processing result in which delay time is minimized although noise is large (the load output Foff based on the signal vector having not been filtered to the LPF processing) are combined at an appropriate ratio. Thus, it is possible to obtain the load signal at a desired response speed in accordance with the traveling state and/or the road surface state.

The combination ratio or proportions may be changed in accordance with, for example, the amplitude or frequency of the detected fluctuation component. When the fluctuation of the input load is in high frequency, the ratio of the load output Foff based on the signal vector not having been filtered by LPF processing is increased so that the estimated load can easily follow the fluctuation component. Thus, even when the fluctuation of the input load is in high frequency, an estimated load with high followability can be output.

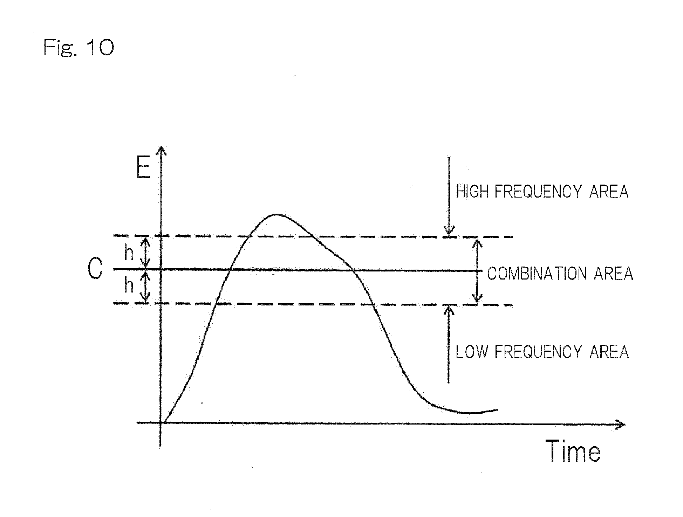

For example, as shown in Fig. 10, a boundary area having a width of h×2 may be provided, as a combination area, in the vicinity of a threshold C of an evaluation value E, between a high frequency area (e.g., an area determined to mainly include frequencies higher than a first frequency value) and a low frequency area (e.g., an area determined to mainly include frequencies lower than a second frequency value). When the evaluation value E is in the combination area, the combination ratio or proportions may be calculated. In particulat, in the load calculation processor 32 shown in Fig. 11, the two load estimation calculation sections 37A, 37B may calculate the load output Fon based on the signal vector having been filtered by LPF processing and the load output Foff based on the signal vector not having been filtered by LPF processing, and the proportions the two load outputs Fon and Foff may be determined based on the evaluation value E, the threshold C, and the boundary area width h, thereby appropriately combining the two load outputs Fon and Foff to output the load value Fout.

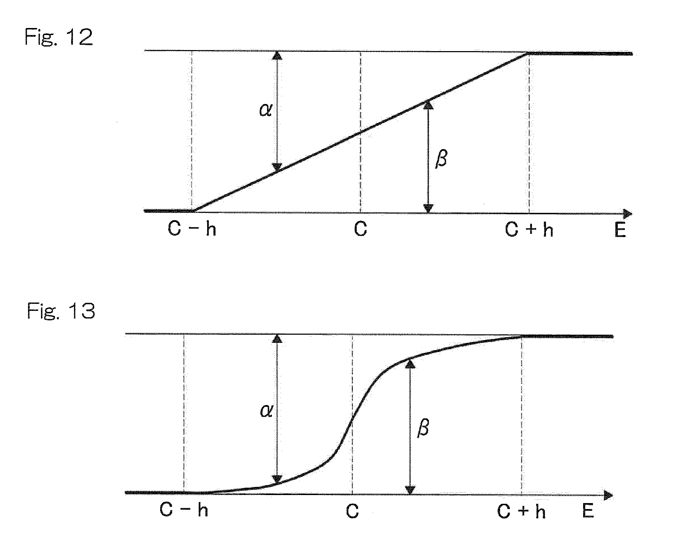

For example, in a graph of Fig. 12 in which a horizontal axis indicates the evaluation value E, the length of an upper portion relative to a slope of a linear function is regarded as a proportion α of the load output Fon when the fluctuation component of the load has a low frequency (when the fluctuation component is determined to have a frequency lower than a given frequency value), and the size of a lower portion relative to the slope of the linear function is regarded as a proportion β of the load output Foff when the fluctuation component of the load has a high frequency (when the fluctuation component is determined to have a frequency higher than the given frequency value). Assuming that an increment from the threshold C is x, the calculation results Fon and Foff are combined in the boundary area as represented by the following equations to generate a load output Fout:

$$Fout = \alpha Fon + \beta Foff \cdots (2)$$

$$\alpha = 1/2h \cdot (x+h) \cdots (3)$$

$$\beta = 1-\alpha \cdots (4)$$

where $\alpha$ and $\beta$ satisfy the relations of the equations (3) and (4), and represent the proportions of the load output Foff and Fon, respectively. For example, as shown in Fig. 12, $\alpha$ and $\beta$ may linearly vary in the boundary area. Instead of the equation (3), $\alpha$ may be represented by any function as long as $\alpha$ is a function of x, that is, $\alpha = f(x)$, and this equation, $\alpha = f(x)$, is a monotonically increasing function in which $\alpha = 0$ when $x = -h$ and $\alpha = 1$ when $x = h$.

For example, as shown in a graph of Fig. 13 in which a horizontal axis indicates the evaluation value E, the proportions may be represented by a curved line. As an example of this case, when an increment from the threshold C is defined as x, $\alpha$ and $\beta$ can be expressed by the following equations using a trigonometric functions:

$$\alpha = \cos^2((h+x)\cdot \pi/4h) \cdots (5)$$

$$\beta = \sin^2((h+x)\cdot \pi/4h) \cdots (6)$$

Using such proportions, the load output Fout does not change sharply in the boundaries of combination area, and therefore, a smooth output can be achieved.

Next, a specific configuration of each of sensor units 20 shown in Fig. 1 will be described. The sensor units 20 provided at four portions shown in Fig. 2 each include the strain generation member 21 and the two strain detection elements 22 (22A, 22B), mounted to the strain generation member 21, for detecting strain occurring in the strain generation member 21, as shown in the enlarged plan view of Fig. 3 and the enlarged cross-sectional view of Fig. 4. The strain generation member 21 is in the form of a thin, elastically deformable plate member, having a thickness not greater than 2 mm and made of a metallic material such as a steel material, and has a roughly belt-like shape, in a planar view, having a uniform width over the entirety of the length. Further, the strain generation member 21 has the three contact fixing segments 21 a that are in contact with and fixed to the outer diameter surface of the outer member 1 via spacers 23. The three contact fixing segments 21 a are arranged in line in the longitudinal direction of the strain generation member 21. One strain detection element 22A among the two strain detection elements 22 is disposed between the contact fixing segment 21 a at the left end and the contact fixing segment 21 a at the center, and the other strain detection element 22B is disposed between the contact fixing segment 21a at the center and the contact fixing segment 21a at the right end, in Fig. 4.

As shown in Fig. 3, cut portions 21b are formed, in each lateral side portion of the strain generation member 21, at two positions corresponding to portions where the strain detection elements 22A, 22B, respectively, are positioned. A corner portion of each cut portion 21b has an arcuate cross sectional shape. The strain detection element 22 detects strain in the circumferential direction around the cut portions 21b. It is desirable that the strain generation member 21 is not plastically deformed even in a state where an estimated maximum force is applied as an external force applied to the outer member 1 that serves as the stationary member or as a force acting between a tire and a road surface. This is because, if plastic deformation occurs, deformation of the outer member 1 is not transmitted to the sensor unit 20, and measurement of strain may be affected. The estimated maximum force is, for example, a maximum force in a range where the wheel support bearing 100 is not damaged even if the force is applied thereto, and the normal function of the wheel support bearing 100 is restored when the force is removed.

In each sensor unit 20, the three contact fixing segments 21a of the strain generation member 21 are positioned in portions having the same size in the axial direction of the outer member 1, and the contact fixing segments 21a are spaced apart from each other in the circumferential direction. The contact fixing segments 21a are fixed to the outer diameter surface of the outer member 1 by means of bolts 24 via the spacers 23. Each bolt 24 is inserted into a bolt insertion hole 25 formed in each contact fixing segment 21 a so as to penetrate in the radial direction, is then inserted into a bolt insertion hole 26 of each spacer 23, and is screwed into a threaded hole 27 formed in an outer peripheral portion of the outer member 1. Thus, the contact fixing segments 21 a are fixed via the spacers 23 to the outer diameter surface of the outer member 1. As a result, a portion having each cut portion 21b in the strain generation member 21 that is thin-plate-shaped, is made apart from the outer diameter surface of the outer member 1, thereby facilitating strain deformation around the cut portions 21b.

As a position, in the axial direction, where the contact fixing segments 21 a are disposed, a position, in the axial direction, around the outboard-side row of the raceway surface 3 in the outer member 1, may be selected. The position around the outboard-side row of the raceway surface 3 is in a range from a mid-position between the inboard-side row of the raceway surface 3 and the outboard-side row of the raceway surface 3, to a portion where the outboard-side row of the raceway surface 3 is formed. In order to stably fix the sensor units 20 to the outer diameter surface of the outer member 1, a flat portion 1b is formed in a portion, of the outer diameter surface of the outer member 1, which is in contact with and fixed to each spacer 23.

Alternatively, a groove (not shown) may be formed, in each of mid-portions between three portions to which the three contact fixing segments 21 a of the strain generation member 21 are fixed, in the outer diameter surface of the outer member 1. Thus, the spacers 23 can be dispensed with, and each portion having each cut portion 21b in the strain generation member 21 may be made apart from the outer diameter surface of the outer member 1.

As the strain detection element 22, various elements can be used. For example, the strain detection element 22 may be formed as a metal foil strain gauge. In this case, the strain detection element 22 is generally fixed to the strain generation member 21 by adhesive medium. Also, the strain detection element 22 may be formed, as a thick film resistor, on the strain generation member 21.

In the structure shown in Figs. 3 and 4, an interval between the two contact fixing segments 21a that are among the three contact fixing segments 21a aligned in the circumferential direction on the outer diameter surface of the outer member 1 serving as the stationary member and that are positioned at both ends in the alignment, is set to be equal to a pitch P with which the rolling elements 5 are arranged. In this case, an interval, in the circumferential direction, between the two strain detection elements 22A, 22B each of which is positioned at a mid-position between the contact fixing segments 21a adjacent to each other, is set to be about 1/2 of the pitch P with which the rolling elements 5 are arranged. As a result, output signals S0, S1 from the two strain detection elements 22A, 22B have a phase difference of about 180 degrees as shown in Fig. 6.

In the structure shown in Fig. 3 and Fig. 4, the interval between the contact fixing segments 21a positioned at the both ends of the alignment, is set to be equal to the pitch P with which the rolling elements 5 are arranged, and each of the strain detection elements 22A, 22B is disposed at the mid-position between the contact fixing segments 21a adjacent to each other, whereby the interval, in the circumferential direction, between the two strain detection elements 22A, 22B is set to be about 1/2 of the pitch P with which the rolling elements 5 are arranged. Alternatively, the interval, in the circumferential direction, between the two strain detection elements 22A, 22B may be directly set to be 1/2 of the pitch P with which the rolling elements 5 are arranged.

The interval, in the circumferential direction, between the two strain detection elements 22A, 22B may be set to be {1/2 + n (n: integer)} times the pitch P with which the rolling elements 5 are arranged, or to be approximate thereto.

Since each sensor unit 20 is provided at a position, in the axial direction, around the outboard-side row of the raceway surface 3 in the outer member 1, output signals from the strain detection elements 22A, 22B are affected by the rolling element 5 that passes near a portion where the sensor unit 20 is mounted. Further, also when the bearing is at a stop, the output signals from the strain detection elements 22A, 22B are affected by the positions of the rolling elements 5. When the rolling element 5 passes by the position closest to the strain detection elements 22A, 22B in each sensor unit 20 (or when the rolling element 5 is positioned at the closest position), the output signals from the strain detection elements 22A, 22B indicate maximum values, and the output signals are reduced as the rolling element 5 moves away from the closest position (or when the rolling element is located at a position away from the position). When the bearing rotates, the rolling elements 5 sequentially pass near the portion where each sensor unit 20 is mounted, with a predetermined arrangement pitch P. Therefore, the output signals from the strain detection elements 22A, 22B have waveforms approximate to a sinusoidal wave that periodically varies in a cycle of the pitch P with which the rolling elements 5 are arranged.

Effects obtained by the embodiment of the present invention will be systematically described below:

- Since LPF processing performed on the sensor signals for load estimating calculation is appropriately ON/OFF switched, followability of the estimated load can be improved when the frequency of the input load is high.
- Since the sum Sadd of the output signals S0, S1 from the two strain detection elements 22A, 22B in each sensor unit 20 is included in the signal vectors used for load calculation, signal components caused by movement of the rolling elements 5 are canceled, and only strain components inputted in phase with each other are extracted. Therefore, unless the input load varies, large variation does not appear in the evaluation value E serving as criteria for determining whether the fluctuation component has a high frequency or a low frequency, thereby realizing an effect that detection of load fluctuation can be accurately performed.

- By adopting the configuration in which ON/OFF switching of LPF processing is determined using only the sum signal Sadd, followability of the estimated load value obtained in the load calculation processor 32 can be improved without the necessity of providing an additional sensor for detecting the frequency of the input load. As a result, improvement of load estimation accuracy is realized without increasing the production cost.

- When the HPF processing section 35 (Fig. 5) provided in the input load fluctuation detector 33 is replaced with a processing section 35A (Fig. 8) for obtaining a difference Sadd_dif between a signal Sadd as a sensor output signal and a signal SaddA obtained by filtering the signal Sadd by LPF processing, calculation for fluctuation component detection is facilitated, and the processing time is reduced.

- As shown in Fig. 11, by combining a load output Fon calculated by using a signal vector having been filtered by LPF processing and a load output Foff calculated by using a signal vector not having been filtered by LPF processing, in accordance with the fluctuation state of the sum signal Sadd (load fluctuation), it is possible to output an estimated load with high followability even when the fluctuation of the input load is in high frequency.

- When the combination ratio or proportion is varied in accordance with the amplitude or frequency of the detected fluctuation component, it is possible to obtain a load signal with a desired response speed in accordance with the traveling state or the road surface condition.

- When the number of samplings of LPF processing performed on the sensor signals is varied in accordance with the fluctuation state of the sum signal Sadd, it is possible to realize appropriate load calculation with higher followability.

- When the sum signals Sadd in all the four sensor units 20 are monitored, load detection can be effectively performed in all the three load directions.

As described above, in the sensor-equipped wheel support bearing assembly having the above configuration, a plurality of sensor units 20 are provided as a sensor for detecting a load acting on the bearing 100, and an output signal from each sensor unit 20 is processed by the signal processor 31 to generate a signal vector, a load acting on a wheel is calculated based on the signal vector by the load calculation processor 32, and a fluctuation component of the input load included in the output signal from each sensor unit 20 is detected by the input load fluctuation detector 33. The load calculation processor 32 calculates the load by applying a load calculation scheme that shifts according to the fluctuation component detected by the input load fluctuation detector 33. Therefore, it is possible to estimate an accurate load value no matter which frequency the fluctuation that occurs in the input belongs to.

When a load acts between a tire of a wheel and a road surface, a load is also applied to the outer member 1 serving as the stationary member of the wheel support bearing 100, to generate deformation. In the exemplary structure shown in Fig. 3 and Fig. 4, the three contact fixing segments 21a of the strain generation member 21 of each sensor unit 20 are in contact with and fixed to the outer member 1. Therefore, strain of the outer member 1 is easily enlarged and transmitted to the strain generation member 21, and the strain is detected by the strain detection elements 22A, 22B with high sensitivity.

In the present embodiment, the four sensor units 20 are provided, and the sensor units 20 are disposed on the upper surface area, the lower surface area, the right surface area, and the left surface area, which are located, on the outer diameter surface of the outer member 1, so as to correspond to upper-lower positions and left-right positions relative to a tire contact surface, such that the sensor units 20 are equally spaced from each other in the circumferential direction so as to be different in phase by 90 degrees. Therefore, it is possible to estimate the load Fz on the wheel support bearing 100 in the vertical diction, the load Fx thereon in the anteroposterior direction, and the load Fy thereon in the axial direction.

In the present embodiment, the outer member 1 serves as a stationary member. Alternatively, the present invention may be applicable to a vehicle-wheel bearing in which the inner member servers as a stationary member. In this case, the sensor units 20 are mounted on a peripheral surface, in an inner circumference, of the inner member.

Further, in the present embodiment, the present invention is applied to the wheel support bearing 100 of the third generation type. Alternatively, the present invention may also applicable to a vehicle-wheel bearing of the first or second generation type in which a bearing portion and a hub are separate components, or a vehicle-wheel bearing of the fourth generation type in which a portion of an inner member is formed by an outer ring of a constant velocity joint. Also, the sensor-equipped wheel support bearing assembly may be applicable to a vehicle-wheel bearing for a driven wheel. Also, the sensor-equipped wheel support bearing assembly may be applicable to tapered roller type vehicle-wheel bearings of each generation type.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

   1 ··· outer member
   2 ··· inner member
   3,4 ··· raceway surface
   5 ··· rolling element

   20 ··· sensor unit (sensor)
   31 ··· signal processor
   32 ··· load calculation processor
   33 ··· input load fluctuation detector

**Claims**

1. A sensor-equipped wheel support bearing assembly comprising:

   a wheel support bearing for rotatably supporting a vehicle wheel relative to a vehicle body structure, the bearing including: an outer member having an inner periphery formed with a plurality of rows of raceway surfaces; an inner member having an outer periphery formed with raceway surfaces that faces the respective raceway surfaces in the outer member; and a plurality of rows of rolling elements interposed between the facing raceway surfaces of the respective outer and inner members;
   a plurality of sensors provided in the wheel support bearing to detect a load acting on the wheel support bearing;
   a signal processor configured to process an output signal from the plurality of sensors to generate a signal vector;
   a load calculation processor configured to calculate a load acting on the wheel, based on the signal vector; and
   an input load fluctuation detector configured to calculate a fluctuation component of the input load which is included in the output signal from at least one of the plurality of sensors, wherein the load calculation processor calculates the load by applying a load calculation scheme that shifts in accordance with the fluctuation component detected by the input load fluctuation detector.

2. The sensor-equipped wheel support bearing assembly as claimed in claim 1, wherein
the load calculation processor
calculates the load based on, out of the signal vector generated by the signal processor, a signal vector obtained without low-pass filtering the output signals from the sensors, when the fluctuation component detected by the input load fluctuation detector includes a high-frequency fluctuation component, and calculates the load based on, out of the signal vector generated by the signal processor, a signal vector obtained by low-pass filtering the output signals from the sensors, when the fluctuation component includes a low-frequency fluctuation component.

3. The sensor-equipped wheel support bearing assembly as claimed in claim 2, wherein

when the load calculation processor calculates the load based on the signal vector obtained by low-pass filtering the output signals from the sensors, the signal processor specifies the number of samplings of the filter processing using a LPF to be performed on the output signals from the sensors, in accordance with the fluctuation component detected by the input load fluctuation detector, so that a cutoff frequency of the LPF is set.

4. The sensor-equipped wheel support bearing assembly as claimed in claim 1, wherein the load calculation processor calculates the load by combining a load value calculated based on, out of the signal vector generated by the signal processor, a signal vector obtained without low-pass filtering the output signals from the sensors, and a load value calculated based on, out of the signal vector generated by the signal processor, a signal vector obtained by low-pass filtering the output signals from the sensors, in accordance with the fluctuation component detected by the input load fluctuation detector.

5. The sensor-equipped wheel support bearing assembly as claimed in claim 4, wherein when an evaluation value E serving as criteria for determining whether the fluctuation component detected by the input load fluctuation detector includes a high-frequency fluctuation component or a low-frequency fluctuation component, is in a boundary area within a predetermined range of $\pm h$ (-h to +h) from a predetermined threshold C, the load calculation processor generates a calculation output Fout by combining a load value Foff calculated based on the signal vector obtained without low-pass filtering the output signals from the sensors, and a load value Fon calculated based on the signal vector obtained by low-pass filtering the output signals from the sensors, in accordance with proportions $\alpha$ and $\beta$ expressed by the following equations:

$$\text{Fout} = \alpha\text{Fon} + \beta\text{Foff}$$

$$\alpha = f(x)$$

$$\beta = 1\text{-}\alpha$$

where x is an increment of the evaluation value E from the threshold C, and $\alpha$ is a monotonically increasing function in which $\alpha = 0$ when x = -h, and $\alpha = 1$ when x = h.

6. The sensor-equipped wheel support bearing assembly as claimed in claim 5, wherein the function f(x) is represented by the following equation:

$$\alpha = f(x) = 1/2h\cdot(x+h)$$

7. The sensor-equipped wheel support bearing assembly as claimed in any one of claims 1 to 6, wherein the at least one sensor includes a sensor unit provided on an outer diameter surface of a stationary member which is either the outer member or the inner member,
the sensor unit includes: a strain generation member having three contact fixing segments that are in contact with and fixed to the outer diameter surface of the stationary member; and two strain detection elements mounted to the strain generation member, and configured to detect a strain occurring in the strain generation member,
the strain detection elements are provided between a first and a second contact fixing segments, of the strain generation member, adjacent to each other, and between the second and a third contact fixing segments thereof adjacent to each other, respectively, and
an interval between the contact fixing segments adjacent to each other or an interval between the strain detection elements adjacent to each other is set to {n + 1/2 (n: integer)} times a pitch with which the rolling elements are arranged.

8. The sensor-equipped wheel support bearing assembly as claimed in claim 7, wherein the input load fluctuation detector detects the fluctuation component, based on a difference Sadd_dif (Sadd_dif = Sadd-SaddA) between a sum Sadd of the output signals from the two strain detection elements, and a signal SaddA obtained by low-pass filtering the sum signal Sadd.

9. The sensor-equipped wheel support bearing assembly as claimed in claim 7, wherein the input load fluctuation detector calculates the evaluation value E based on past data of a difference Sadd_dif (Sadd_dif = Sadd-SaddA) between a sum Sadd of the output signals from the two strain detection elements, and a signal SaddA obtained by low-pass filtering the sum signal Sadd, and
the calculated evaluation value E is outputted as a detection result of the input load fluctuation detector.

10. The sensor-equipped wheel support bearing assembly as claimed in claim 9, wherein the evaluation value E is an RMS value of the difference values Sadd_dif within a predetermined period of time.

11. The sensor-equipped wheel support bearing assembly as claimed in claim 9, wherein
the evaluation value E is a standard deviation of the difference values Sadd_dif within a predetermined period of time.

12. The sensor-equipped wheel support bearing assembly as claimed in claim 9, wherein
the evaluation value E is a maximum value of the difference values Sadd_dif within a predetermined period of time.

13. The sensor-equipped wheel support bearing assembly as claimed in claim 9, wherein
the evaluation value E is an integrated value of absolute values of the difference values Sadd_dif within a predetermined period of time.

14. The sensor-equipped wheel support bearing assembly as claimed in any one of claims 9 to 13, wherein
the input load fluctuation detector calculates the evaluation value E by calculating the difference values Sadd_dif for the plurality of sensor units, respectively, and selecting one of the difference values or combining some or all of the difference values, and the calculated evaluation value E is outputted as a detection result of the input load fluctuation detector.

15. The sensor-equipped wheel support bearing assembly as claimed in claim 7, wherein
the input load fluctuation detector detects the fluctuation component, based on a signal obtained by high-pass filtering a sum signal Sadd of the output signals from the two strain detection elements.

Fig. 1

Fig. 2

Fig. 3

Fig. 4

Fig. 5

Fig. 6

Fig. 7

Fig. 8

INPUT LOAD FLUCTUATION DETECTOR
33
36

35A

S → Sadd CALCULATION | Sadd → LPF | SaddA

Sadd_dif → FLUCTUATION DETECTION → LOAD FLUCTUATION COMPONENT INFORMATION

34

Fig. 9

32

LOAD CALCULATION PROCESSOR
38

Save,Srms,SaddA
(LPF ON)

S,Sadd
(LPF OFF)

LOAD ESTIMATION → Fout

37

LOAD FLUCTUATION COMPONENT INFORMATION

Fig. 10

Fig. 11

Save,Srms,SaddA (LPF ON) → LOAD ESTIMATION (LPF ON) — Fon → LOAD COMBINATION — Fout → 39

S,Sadd (LPF OFF) → LOAD ESTIMATION (LPF OFF) — Foff → LOAD COMBINATION

37A — LOAD CALCULATION PROCESSOR — 32

37B

LOAD FLUCTUATION COMPONENT INFORMATION

Fig. 12

Fig. 13

Fig. 14

SENSOR SIGNAL
S → SENSOR SIGNAL CALCULATOR → Save,Srms,SaddA → LOAD CALCULATION PROCESSOR

131a

132

**EP 2 930 486 A1**

<table>
<tr><td colspan="2" align="center">INTERNATIONAL SEARCH REPORT</td><td colspan="2">International application No.<br>PCT/JP2013/081695</td></tr>
</table>

A. CLASSIFICATION OF SUBJECT MATTER
*G01L5/00*(2006.01)i, *B60B35/18*(2006.01)i, *F16C19/18*(2006.01)i, *F16C19/52* (2006.01)i, *F16C41/00*(2006.01)i

According to International Patent Classification (IPC) or to both national classification and IPC

B. FIELDS SEARCHED

Minimum documentation searched (classification system followed by classification symbols)
G01L5/00, B60B35/18, F16C19/18, F16C19/52, F16C41/00

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2012-037471 A  (NTN Corp.),<br>23 February 2012 (23.02.2012),<br>entire text; all drawings<br>& WO 2012/020654 A1 | 1,7<br>2-6,8-15 |
| X<br>A | JP 2012-103221 A  (NTN Corp.),<br>31 May 2012 (31.05.2012),<br>entire text; all drawings<br>& US 2013/0223778 A1    & WO 2012/066995 A1<br>& CN 103210291 A | 1,7<br>2-6,8-15 |
| A | JP 2012-103083 A  (NTN Corp.),<br>31 May 2012 (31.05.2012),<br>paragraphs [0033] to [0054]; all drawings<br>& US 2013/0177269 A1    & WO 2012/033018 A1<br>& DE 112011103019 T     & CN 103140745 A | 1-15 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    17 December, 2013 (17.12.13) | Date of mailing of the international search report<br>    07 January, 2014 (07.01.14) |
|---|---|
| Name and mailing address of the ISA/<br>    Japanese Patent Office | Authorized officer |
| Facsimile No. | Telephone No. |

Form PCT/ISA/210 (second sheet) (July 2009)

25

**INTERNATIONAL SEARCH REPORT**

| International application No. |
| --- |
| PCT/JP2013/081695 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2007-132918 A  (NSK Ltd.),<br>31 May 2007 (31.05.2007),<br>paragraphs [0032], [0036]<br>& US 2009/0052825 A1    & EP 1995580 A1<br>& WO 2007/105655 A1    & KR 10-2008-0094104 A<br>& CN 101400979 A | 2-6,8-15 |
| A | JP 2004-270898 A  (Koyo Seiko Co., Ltd.),<br>30 September 2004 (30.09.2004),<br>paragraphs [0028] to [0040]; fig. 3, 4<br>& US 2005/0169563 A1    & EP 1550813 A1<br>& WO 2003/102434 A1 | 2-6,8-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012266847 A
- JP 2003530565 A
- JP 2009270711 A
- JP 2010043901 A
- JP 2010096565 A